# EUROPÄISCHE PATENTANMELDUNG

(11) **EP 0 636 560 A1**
(43) Veröffentlichungstag der Anmeldung: **01.02.1995**
(21) Anmeldenummer: 93112239.4
(22) Anmeldetag: 30.07.1993
(51) Int. Cl.: B65G 53/08

(54) **Schneckenpumpe mit Stabilisierungsgitter zum kontinuierlichen Fördern staubförmiger und feinkörniger Schüttgüter**

(71) Anmelder: IBAU HAMBURG INGENIEURGESELLSCHAFT INDUSTRIEBAU MBH, D-20459 Hamburg (DE)
(72) Erfinder: Appenzeller, Gerhard, D-21217 Seevetal 2 - Over (DE)
(74) Vertreter: von Raffay, Vincenz, Dipl.-Ing.

(57) **Zusammenfassung**

Die Schneckenpumpe zum kontinuierlichen Fördern staubförmiger und feinkörniger Schüttgüter weist eine einseitig gelagerte Förderschnecke (4) auf, die das Schüttgut aus einem unter Umgebungsdruck stehenden Einlaufraum (6) über eine an ihrem Austragsende angeordnete Rückschlagklappe (12) in eine Druckkammer (11) fördert. Am Austragsende der Förderschnecke (4) ist zwischen dieser und der Rückschlagklappe (12) ein vorzugsweise als Kreuz ausgebildetes Stabilisierungsgitter (2) angeordnet. Dieses Stabilisierungsgitter oder -kreuz wirkt einer Rotation des Materialpfropfens hinter dem Austragsende der Förderschnecke entgegen, d.h. diese Rotation wird verhindert, um dadurch den Verschleiss der entsprechenden Bauteile, insbesondere einer dort angeordneten Staubbuchse (18), herabzusetzen und bei stabiler und wirksamer Förderung für einen ruhigen Lauf zu sorgen.

## Beschreibung

Die Erfindung betrifft eine Schneckenpumpe nach dem Oberbegriff des Anspruches 1.

Das Schüttgut, bei dem es sich beispielsweise um Flugasche oder Zementmehl handelt, wird unter Umgebungsdruck der Pumpe aufgegeben und von einer Förderschnecke mit konstanter Drehzahl von jeweils 700 bis 1000 Upm in einen Raum geschleust, der zwecks Flugförderung im Rohr unter dem höheren Rückdruck des Feststoff-Luftgemisches steht. Der Füllungsgrad der Förderschnecke beträgt unter diesen Betriebsbedingungen ca. 25 bis 30 %.

Zur Vermeidung von Luftrückschlägen und Luftverlusten wird am Ende des Schneckengehäuses das Schüttgut durch eine schwenkbare und gewichtsbelastete Rückschlagklappe angestaut, so daß ein Materialpfropfen entsteht. Die Schneckenwelle ist ausserhalb des Fördergut führenden Pumpengehäuses durch Wälzlager einseitig gelagert. Die Vorteile dieser Schneckenpumpen, wie sie auch in den Druckschriften DE-OS 25 07 687, US-PS 3,602,552, US-PS 3,975,058 beschrieben werden, liegen in der kontinuierlichen und staubfreien Massengutförderung über mehrere hundert Meter in annähernd beliebiger horizontaler und vertikaler Rohrleitungsverlegung und dem einfachen, robusten Gesamtbetrieb.

Es sind allerdings Verschleissbelastungen in Abhängigkeit der Schüttguteigenschaften, der Schneckendrehzahl, der Förderentfernung und der Rückdruckbelastung aufzunehmen. Deshalb sind die Förderschnecke, Verschleissbuchsen, Rückschlagklappe und Abschlussring leicht auswechselbar. Durch Kapazitätserweiterungen und Rationalisierungsmassnahmen mussten auch die Massenströnme der Pumpen angehoben werden. Grössere Pumpenprofile und höhere Rückdruckbelastungen führten bei höheren Schneckendrehzahlen zwangsläufig zu höherem Verschleiss.
Es stellte sich heraus, daß der zusätzlich abdichtende Materialpfropfen zwischen Schneckenende und Rückschlagklappe instabil wurde und den Luftabschluss für nicht alle, vor allem höher belastende, Betriebsbedingungen sichern konnte. Durch höhere Rückdruckbelastungen, aber auch bei Fördergütern mit höheren Feinheiten bzw. stark kohäsiven Eigenschaften, wurde festgestellt, daß dieser Materialpfropfen in eine Relativrotation zur Schneckenwelle und damit zum Gehäuse, überführt wurde. Die Folgen waren erhöhter Abrieb in der Staubuchse, am Schneckenendflügel und der Rückschlagklappe sowie Teilverkrustungen des Schüttgutes, unruhiger Lauf der Schneckenwelle und Erwärmung des Schüttgutes wie der Pumpenteile.

Schneckenpumpen, deren Schneckenwellen an beiden Wellenenden gelagert sind, wie sie aus den Druckschriften DE-PS 593 486, DE-PS 32 24 710, US-PS 2,428,995 hervorgehen, konnten zwar einen schwingungsfreieren Lauf der Schneckenwelle verwirklichen, aber nicht optimale Gesamtbedingungen für den Förderbetrieb.

Problematisch stellt sich die Tatsache, daß die am Schneckenende befindliche Lagerung der erhöhten Staubluft-Druckbelastung ausgesetzt ist und die Rückschlagklappe von der durchgeführten Welle durchdrungen werden musste. Die Folge dieser Massnahmen sind Einschränkungen in der Rückdruckbelastung und damit auch in der Förderentfernung bzw. im Energiebedarf.

Der Erfindung liegt nun die Aufgabe zugrunde, eine Schneckenpumpe nach dem Oberbegriff des Anspruches 1 zu schaffen, die bei einfacher Bauausführung eine Förderung über grosse Entfernung, auch schwierig zu handhabender Schüttgüter, ermöglicht, und dabei dennoch ruhig läuft und an den kritischen Bauteilen einen möglichst geringen Verschleiss aufweist.
Diese Aufgabe wird durch das Kennzeichen des Anspruches 1 gelöst.

Erfindungsgemäss wird in Förderrichtung im Anschluss an die Förderschnecke ein besonderes Bauteil, das als "Stabilisierungsgitter" bezeichnet wurde, vorgesehen, um den Materialpfropfen zwischen Austragsende der Förderschnecke und der Rückschlagklappe zu stabilisieren, insbesondere seine Relativrotation zu dem ihn umgebenden Gehäuse zu verhindern. Grundsätzlich genügt ein Stabilisierungsstab zur Bildung des Stabilisierungsgitters. Das Stabilisierungsgitter ist aber vorzugsweise als symmetrisch gestaltetes Stabilisierungskreuz mit einer entsprechenden Anzahl von Stabilisierungsstäben oder -flügeln ausgerüstet, die so gestaltet und angeordnet sind, daß sie den Materialfluss nicht behindern, aber für die gewünschte Stabilisierung sorgen, d.h. die Übertragung einer Drehbewegung auf den Materialpfropfen verhindern. Hierdurch wird auch erreicht, daß die Materialkonzentration über den Querschnitt des Materialpfropfens konstantgehalten wird und keine Abschnitte höherer oder geringerer Materialkonzentration entstehen.

Das von der Förderschnecke kommende, vorverdichtete Schüttgut passiert das Stabilisierungsgitter oder -kreuz und löst dabei die entstandenen Ringspannungen auf, so daß die Pfropfenrotation sicher unterbunden wird. Durch diesen Trennvorgang wird im Materialpfropfen der Dichtezustand vergleichmässigt und ein absolut konstanter Fluss des Materials im Bereich der Staubbuchse in Richtung Rückschlagklappe hervorgerufen. Erwärmungen, Schüttgutverkrustungen, Abrieb und Luftrückschläge werden unterbunden oder zumindest stark minimiert. Die Schneckenpumpe läuft ruhig und die Verschleissbelastungen konnten deutlich bei verbesserter Förderkontinuität reduziert werden.

In den Unteransprüchen sind vorteilhafte Ausgestaltungen unter Schutz gestellt.

Im folgenden wird die Erfindung unter Hinweis auf die Zeichnung anhand eines Ausführungsbeispieles näher erläutert.

Es zeigt:

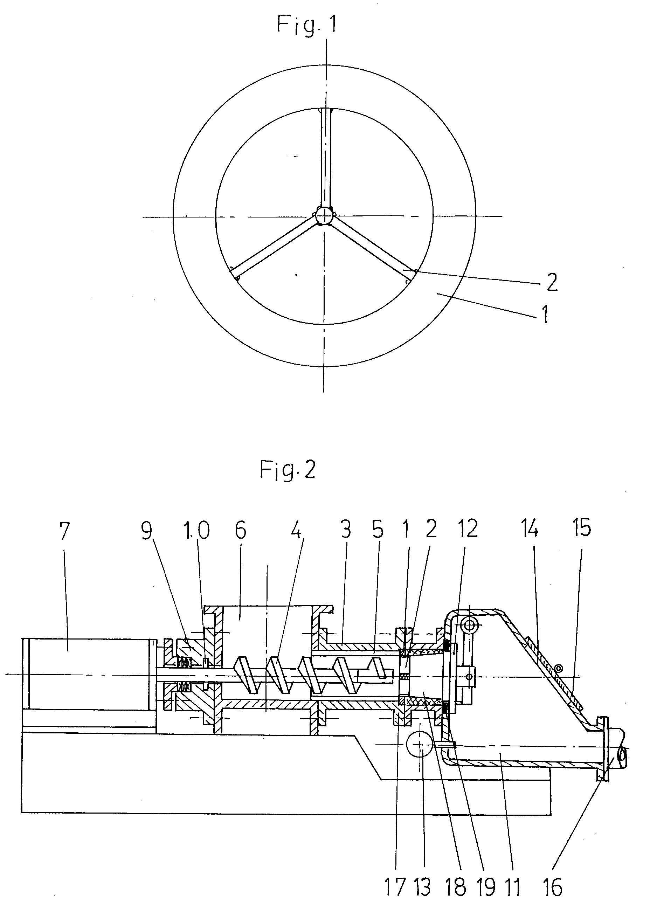

- Fig. 1: eine Draufsicht auf ein als Kreuz ausgebildetes Stabilisierungsgitter mit Tragring;
- Fig. 2: einen Längsschnitt durch eine Ausführungsform einer Schneckenpumpe nach der Erfindung;

Die in der Zeichnung dargestellte Schneckenpumpe besteht aus einem Schneckengehäuse 3, in dem die Förderschnecke 4 in einer Verschleissbuchse 5 läuft. Die Schüttguteingabe erfolgt in einen Einlaufraum 6 unter Umgebungsdruck. Angetrieben wird die Förderschnecke 4 durch einen Antrieb, der unmittelbar hinter einem Lagergehäuse 7 vorgesehen ist. Eine Stopfbuchse 9 und eine Spülluftsperre 10 sorgen für eine entsprechende Abdichtung in diesem Bereich.

Am Austragsende der Förderschnecke 4 befindet sich hinter der Förderschnecke eine Staubbuchse 18, an die sich in Förderrichtung eine Druckkammer 11 anschliesst. Die Druckkammer 11 ist gegenüber dem Schneckengehäuse 3 durch eine Rückschlagklappe 12 abgedichtet, die gewichtsbelastet ist. Das Gehäuse der Druckkammer 11 weist Luftzuführungsdüsen 13 sowie eine Öffnung 14 mit Deckel 15 auf. Das Abförderrohr ist mit 16 bezeichnet.

Zwischen dem Schneckengehäuse 3 und der Staubbuchse 18 ist das als Stabilisierungskreuz 2 bezeichnete Stabilisierungsgitter angeordnet, das an einem Tragring 1 angeordnet ist. Der Tragring 1 ist in einem Rezess im Bereich des Flansches am Ende des Schneckengehäuses 3 gelagert. Die Befestigung erfolgt mit Hilfe eines Abschlussringes 19, der auf die Staubbuchse 18 drückt. Durch Lösen der Teile 18 und 19 kann der Tragring 1 mit dem Stabilisierungskreuz 2 ein- und ausgebaut werden.

Es ist ohne weiteres verständlich, daß das Stabilisierungsgitter, je nach Förderbedingungen und Art des zu fördernden Schüttgutes, unterschiedlich ausgebildet sein kann. Als vorteilhaft hat sich die Ausgestaltung als symmetrisches Stabilisierungskreuz mit zwei oder mehr Stabilisierungsstäben herausgestellt, die vorzugsweise einen gleichen Winkel zwischen sich einnehmen. Die Stabilisierungsstäbe sind als Flachstäbe aus Flachstahl ausgebildet. Ihre grössere Erstreckung haben sie in Förderrichtung des Schüttgutes, wobei die Anstellung in einem geringen Winkel vorteilhaft sein kann. Wesentlich ist, daß eine Drehbewegung des Materialpfropfens im Bereich der Staubbuchse 18 verhindert wird, um so einem erhöhten Verschleiss in diesem Bereich wirksam entgegenzuwirken und gleichzeitig für eine stabile und ruhige Förderung zu sorgen.

## Patentansprüche

1. Schneckenpumpe zum kontinuierlichen Fördern staubförmiger und feinkörniger Schüttgüter durch eine einseitig gelagerte Förderschnecke (4) aus einem unter Umgebungsdruck stehenden Einlaufraum (6) über eine am Austragsende der Förderschnecke angeordnete Rückschlagklappe (12) in eine Druckkammer (11), dadurch gekennzeichnet, daß am Austragsende der Förderschnecke (4) zwischen dieser und der Rückschlagklappe (12) ein Stabilisierungsgitter (2) angeordnet ist.

2. Schneckenpumpe nach Anspruch 1, dadurch gekennzeichnet, daß das Stabilisierungsgitter als Stabilisierungskreuz (2) mit einem oder mehreren Stabilisierungsstäben ausgebildet ist.

3. Schneckenpumpe nach Anspruch 1 oder 2, dadurch gekennzeichnet, daß das Stabilisierungskreuz (2) an einem Tragring (1) ausgebildet ist, der zwischen einer Staubbuchse (18) am Austragsende der Förderschnecke (4) und der Rückschlagklappe (12) angeordnet ist.

4. Schneckenpumpe nach Anspruch 3, dadurch gekennzeichnet, daß der Tragring (1) in einem Rezess zwischen dem Gehäuse (3) am Austragsende der Förderschnecke (4) und der Staubbuchse (18) angeordnet ist.

5. Schneckenpumpe nach Anspruch 4, dadurch gekennzeichnet, daß der Tragring (1) durch einen Abschlussring (19) zwischen Staubbuchse (18) und Rückschlagklappe (12) auswechselbar gehalten wird.

6. Schneckenpumpe nach einem oder mehreren der vorstehenden Ansprüche, dadurch gekennzeichnet, daß die das Stabilisierungskreuz (2) bildenden Stabilisierungsstäbe als Flachstäbe ausgebildet sind, deren flache Flanken in Strömungsrichtung des Schüttgutes gerichtet sind.

7. Schneckenpumpe nach Anspruch 6, dadurch gekennzeichnet, daß die flachen Flanken der Flachstäbe um 2° bis 5° gegen die Strömungsrichtung des Schüttgutes angestellt sind.

8. Schneckenpumpe nach einem oder mehreren der vorstehenden Ansprüche, dadurch gekennzeichnet, daß das Stabilisierungskreuz (2) drei Flachstäbe aufweist, die in einem Winkel von 120° zueinander stehen.

9. Schneckenpumpe nach einem oder mehreren der vorstehenden Ansprüche 1 bis 6, dadurch gekennzeichnet, daß das Stabilisierungskreuz (2) mehr als drei Stabilisierungsstäbe aufweist, die jeweils einen gleichen Winkel zueinander aufweisen.
